# EUROPEAN PATENT SPECIFICATION

(11) **EP 3 222 518 B1**
(45) Date of publication and mention of the grant of the patent: **02.01.2019**
(21) Application number: 16164294.7
(22) Date of filing: 07.04.2016
(51) Int. Cl.: B64C 11/06, B64C 11/30, B64C 11/48, B64D 27/08, B64D 35/06, B64D 35/08

(54) **DOUBLE-PROPELLER AIRCRAFT**
DOPPELPROPELLERFLUGZEUG
AÉRONEF DOUBLE HÉLICE

(30) Priority: 25.03.2016 IT UA20162036
(43) Date of publication of application: 27.09.2017
(73) Proprietor: Robby Moto Engineering S.r.l., 26041 Casalmaggiore (CR) (IT)
(72) Inventor: Papetti, Roberto, 26041 Casalmaggiore (CR) (IT)
(74) Representative: Brunacci, Marco

(56) References cited:
- EP-A1- 2 947 014
- FR-A- 800 485
- GB-A- 591 492
- US-A- 2 978 208
- US-A1- 2009 026 310

## Description

The present invention relates to a double-propeller aircraft.

As known, the need to monitor the land area, shown by regional, national and international requests, both in the urban and suburban field, is strong and growing.

In view of this requirement, an increasing demand exists for personnel with pilot's license.

The land area has, in recent years, undergone big changes tied to transformations in the economy that have resulted in new industrial development, a greater concentration of population in urban areas and intensive farming methods with a population decline in rural areas.

The development of technologies for environment monitoring and land area safety is an important segment of the more general issue of a management and control system.

The use of aeronautical vehicles was introduced some years ago with fixed-wing aircraft (airplanes) to monitor coasts, borders, traffic surveillance, fire prevention, photo surveys, even for military purposes.

The high costs of these vehicles mean that they are almost exclusively used by the corps of the Armed Forces.

The required activities for regional use in the land area, in order to be effective, must have specific characteristics:
- quick implementation;
- reach the scene of the accident accurately, without orographic or road network limits, in certain cases not viable;
- availability and immediate use of instruments, equipment, and qualified personnel, in order to limit the intervention to a reconnaissance, but immediately giving it characteristics of "operational readiness".

To meet these needs, the use is known of fixed-wing aircraft which, until now, can be classified into two macro segments:
- single-engine aircraft, i.e. equipped with a single turbine or piston engine used mostly in flying schools or for transporting two or three passengers;
- multi-engine aircraft, i.e. equipped with double turbine or piston engine able to function redundantly. Multi-engine aircraft, in turn, are classified into standard multi-engine, wherein the engines are arranged at a specific distance with respect to the central axis of the aircraft, and multi-engine center line thrust, wherein the engines are arranged at a minimum and substantially negligible distance with respect to the central axis of the aircraft.

The fundamental requirement for the use of such aircraft is the obtaining of a pilot's license.

The main drawback of single-engine aircraft is linked to poor safety due to possible engine failures as they are not equipped with any redundancy system and do not guarantee the safety standards to allow flying in certain areas of the territory, such as residential areas or water expanses, e.g., during night flights in which it is particularly difficult to find a suitable area for an emergency landing. The use of multi-engine aircraft permits to overcome such drawbacks.

As regards the use of multi-engine aircraft, licenses are issued following adequate training for flying and controlling the aircraft and any failures that might occur during the flight and differ according to the type of multi-engine aircraft.

In particular, licenses for the use of multi-engine center line thrust aircraft are limited compared to licenses issued for standard multi-engine aircraft, because the extent of the critical issues that could occur in the event of failure is directly proportionate to the distance between the two engines and, consequently, for multi-engine center line thrust aircraft, these are greatly reduced.

In other words, the case of a failure of one of the engines in standard multi-engine aircraft entails great difficulty in controlling the aircraft inasmuch as the only engine still running produces an asymmetric thrust on the aircraft itself. Generally, the most widely used aircraft for both military and civil purposes are of the standard multi-engine type, wherein each engine is fitted on a respective wing, and for which therefore a relative license is required.

These multi-engine aircraft of known type, however, have several drawbacks. The main drawback is tied to the fact that standard multi-engine aircraft are without an adequate redundancy system that guarantees the safety standards required for flying in certain areas of the territory, with consequent difficulties for the pilot to control the aircraft themselves in case of an engine failure. More in detail, the majority of multi-engine aircraft, in case of failure of one of the two engines, provides performances close to those of single-engine aircraft. In other words, the loss of one of the two engines is often a limit case due to the difficulty the pilot has in controlling the aircraft in such conditions.

To this must be added that to qualify for flying such multi-engine aircraft, numerous hours of training and practice are required and the costs which would-be pilots have to sustain to obtain the relative pilot's license are quite high. FR 800495 discloses an aviation engine comprising two crankshafts, each one driving a gear of a gearbox, the gearbox being used to drive a set of co-axial counter-rotating propellers offset from both crankshafts. EP 2947014 discloses an aviation engine comprising two crankshafts, each one driving a pulley, the pulleys being used to commonly drive, via a further pulley offset from both crankshafts, a helicopter main and tail rotor. US 2009/026310, US 2,978,208 and GB 591492 all relate to a set of co-axial counter-rotating propellers or rotors driven by one or two engines with two parallel output shafts or crankshafts combined, in the first two cases with the propellers or rotors rotating about an axis which is identical to that of one of the engines' crankshafts or output shafts.

The main aim of the present invention is to provide an aircraft which allows ensuring the safety standards required for flying over both urban and suburban areas by means of appropriate redundancy systems which enable the pilot to manage and control the aircraft itself in a simpler and efficient way in the event of failures.

One object of the present invention is to provide a double-propeller aircraft able to ensure a simplified training and fast learning course by persons about to obtain a pilot's license compared to common training courses, with a correlated reduction of costs for the would-be pilots.

Another object of the present invention is to provide a double-propeller aircraft which allows to overcome the mentioned drawbacks of the prior art within the ambit of a simple, rational, easy, effective to use as well as affordable solution. The above mentioned objects are achieved by the present double-propeller aircraft having the characteristics of claim 1.

Other characteristics and advantages of the present invention will become better evident from the description of a preferred, but not exclusive, embodiment of a double-propeller aircraft, illustrated by way of an indicative, but non-limiting, example in the accompanying drawings, wherein:

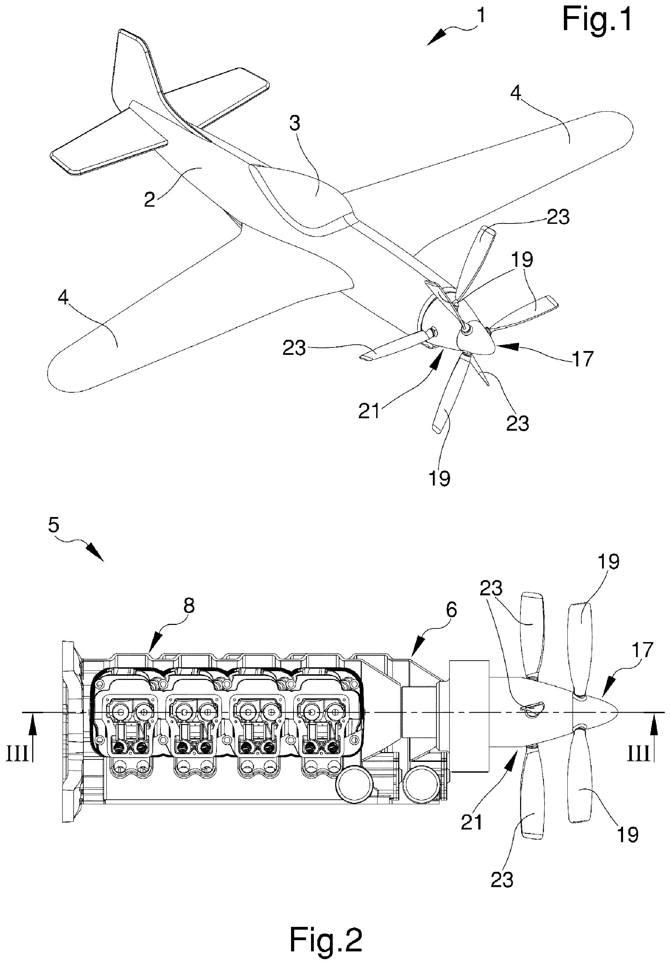

Figure 1 is an axonometric view of the aircraft according to the invention;
Figure 2 is a side view of the propulsion system of the aircraft according to the invention;
Figure 3 is a sectional view along the plane III - III of Figure 2;

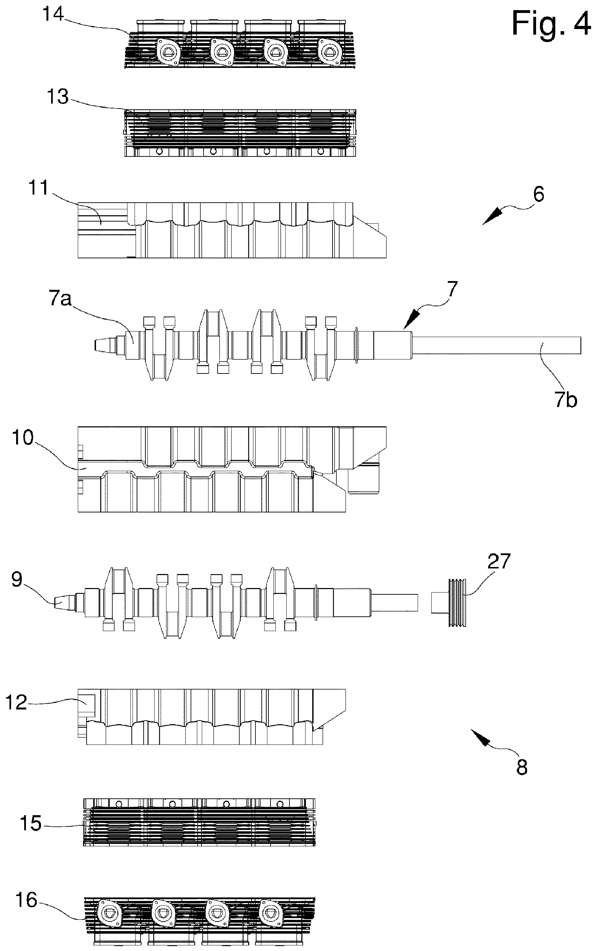

Figure 4 is an exploded view of a detail of the propulsion system of the aircraft according to the invention.

With particular reference to such figures, globally indicated by 1 is a double-propeller aircraft.

The aircraft 1 comprises a fixed wing structure 2, 3, 4 for the flight of the aircraft comprising a base frame 2, having at least a cockpit 3 and a pair of fixed wings 4 which extend horizontally jutting from the base frame 2.

In the present treatise, the word "horizontal" is used with reference to the position taken by the aircraft 1 in the condition of normal parking on the ground.

The aircraft 1 comprises a propulsion system 5 suitable for moving the aircraft 1 in flight.

According to the invention, the propulsion system 5 comprises a first piston engine 6 to put a first drive shaft 7 in rotation around a first axis of rotation A substantially horizontal, and a second piston engine 8 to put a second drive shaft 9 in rotation around a second axis of rotation B substantially horizontal and parallel to the first axis of rotation A.

Advantageously, the first axis of rotation A is substantially coincident with the central axis of the aircraft 1.

The two engines 6, 8 have an independent operation from the mechanical point of view but are integrated in a single engine body 10, 11, 12, 13, 14, 15, 16.

In particular, the engines 6, 8 comprise a central engine housing 10, a first side engine housing 11 and a second side engine housing 12, the first drive shaft 7 being housed between the central engine housing 10 and the first side engine housing 11 and the second drive shaft 9 being housed between the central engine housing 10 and the second side engine housing 12.

The first engine 6 also comprises a first group 13 of first cylinders 13a wherein are housed sliding a plurality of first pistons 13b which, by means of corresponding first connecting rods 13c, are suitable for driving in rotation the first drive shaft 7.

The first group 13 consists, e.g., of a single block which is associated with the first side engine housing 11 in the assembly phase, e.g., by means of screws, bolts or the like; alternative embodiments cannot however be ruled out wherein the first side engine housing 11 and the first group 13 are made in a single body piece.

The first engine 6, furthermore, comprises a first head 14, for the closure of the first cylinders 13a.

The first head 14, e.g., houses the intake and exhaust valves of each first cylinder 13a and is associated with the first group 13 in the assembly phase, e.g. by means of screws, bolts or the like.

Similarly to the first engine 6, the second engine 8 comprises a second group 15 of second cylinders 15a wherein are housed sliding a plurality of second pistons 15b which, by means of corresponding second connecting rods 15c, are suitable for driving in rotation the second drive shaft 9.

In a similar manner to the first side engine housing 11, the second group 15 consists, e.g., of a single block which is associated with the second side engine housing 12 in the assembly phase, e.g., by means of screws, bolts or the like; alternative embodiments cannot however be ruled out wherein the second side engine housing 12 and the second group 15 are made in a single body piece.

The second engine 8 also comprises a second head 16, for the closure of the second cylinders 15a.

The second head 16, e.g., houses the intake and exhaust valves of each second cylinder 15a and is associated with the second group 15 in the assembly phase, e.g., by means of screws, bolts or the like.

The first cylinders 13a and the second cylinders 15a are arranged horizontally, i.e., they define a sliding direction of the pistons 13b, 15b which is horizontal.

The first cylinders 13a and the second cylinders 15a, moreover, are arranged along opposing lines, i.e., the cylinders 13a, 15a of each engine 6, 8 are arranged in line, with the sliding directions of the pistons 13b, 15b which are parallel to each other and each line is located at 180° with respect to the other. In normal operating conditions, the first engine 6 and the second engine 8 can be operated simultaneously and both operate substantially at 50% of the nominal power while, in case of failure of one of them, the other is able to complete the flight in safety conditions by operating at full power.

In particular, the management of the two engines 6, 8 is supervised by the FADEC system, which has the function of controlling the supply system and the electronic management of the individual engines 6, 8 (injection, ignition), including redundancy and diagnostics, as well as the function of managing optimization in conditions of coordinated operation of the two engines 6, 8 (synchronization) and emergency.

The propulsion system 5 comprises a first propeller 17 keyed on the first drive shaft 7.

The first propeller 17 comprises a first hub body 18, fitted around the first drive shaft 7 to rotate the first propeller 17 around the first axis of rotation A, and a plurality of first blade elements 19 associated with the first hub body 18.

The first hub body 18 is hollow and suitable for the insertion of the first drive shaft 7 to which is keyed by means of suitable fastening means which allow the rotation of the first hub body 18 around the first axis of rotation A.

The first hub body 18 comprises a plurality of first coupling portions 20, each of which being suitable for keying a respective first blade element 19.

In the preferred embodiment shown in the figures, the first propeller 17 is a variable pitch propeller.

In the context of the present treatise, by the expression "variable pitch propeller" is meant the particular propeller wherein the first blade elements 19 can be rotated around the first axis of rotation A in order to modify the pitch thereof, i.e., the distance covered following a complete revolution of the propeller itself.

The angle of incidence of the first blade elements 19 may vary from 0° to 90°, the latter position being called "flag" because it minimizes the air resistance with the engine turned off or failed.

The variation in this angle of incidence is obtained by means of suitable adjustment means associated with the first hub body 18 and having at least an actuator of the electro-mechanical or hydraulic type which, by acting on each first blade element 19 determines its variation in orientation.

Conveniently, the propulsion system 5 also comprises a second propeller 21 mounted idle on the first drive shaft 7.

The second propeller 21 comprises a second hollow hub body 22 fitted around the first drive shaft 7 on which it is mounted idle, and a plurality of second blade elements 23 associated with the second hub body 22.

Such blade elements 19, 23 have substantially coinciding dimensions.

The second hub body 22 comprises a plurality of second coupling portions 24 each of which is suitable for keying a respective second blade element 23 onto the second hub body itself.

In the preferred embodiment shown in the illustrations, the second propeller 21 is a variable pitch propeller, identical to the first propeller 17, wherein the variation in the angle of incidence is obtained by means of the previously-described suitable adjustment means associated with the second hub body 22. Conveniently, the aircraft 1 comprises at least a radial bearing element 25 interposed between the first drive shaft 7 and the second hub body 22 and is suitable for maintaining the second propeller 21 mounted idle on the first drive shaft 7.

In the present case, the radial bearing element 25 causes the first drive shaft 7 to be suitable for supporting only the second propeller 21 thus preventing the motion of rotation of the first drive shaft 7 being transmitted to the second propeller 21.

Conveniently, the aircraft 1 may comprise sealing elements, e.g., made of rubber, for closing the interspace defined between the second hub body 22 and the first drive shaft 7, inside which is arranged the radial bearing element 25, which slide on the first drive shaft 7 during the rotation of the second propeller 21.

Such sealing elements are suitable for protecting the radial bearing element 25 from any dust that may enter the interspace between the second hub body 22 and the first drive shaft 7 and jeopardize the correct operation of the radial bearing element itself.

Advantageously, the first propeller 17 and second propeller 21 are coaxial and counter-rotating the one to the other with respect to the first axis of rotation A and driven respectively by the first engine 6 and the second engine 8.

In the preferred embodiment shown in the illustrations, the first engine 6 and the second engine 8 are suitable for providing motions of rotation in opposite directions the one to the other on the first drive shaft 7 and the second drive shaft 9 respectively so that the drive shafts 7, 9 counter-rotate the one to the other with respect to the axes of rotation A, B.

An alternative embodiment cannot however be ruled out wherein the counter-rotation of the two propellers 17, 21 can be provided by means of appropriate inversion means of the rotation motion of the axes of rotation A, B in the case in which the engines 6, 8 are suitable for the rotation of the drive shafts 7, 9 in the same direction the one to the other around their respective axes of rotation A, B. The fact that the propellers 17, 21 are coaxial and counter-rotating the one to the other causes the mechanical reaction moment generated by the rotation of one of the propellers 17, 21 to be counteracted by the other propeller 17, 21 by means of the relative contrary rotation.

It follows that the aircraft 1 features simplified handling characteristics for the pilot both during flight and taxiing.

In the particular embodiment shown in the figures, the first propeller 17 and the second propeller 21 are juxtaposed by interposition of an axial bearing element 26.

Usefully, the axial bearing element 26 allows reducing the friction created between the outer surfaces of the first hub body 18 and of the second hub body 22 arranged in close contact with each other, wherein such friction is due to the forces that extend parallel to the first axis of rotation A during the rotation of the propellers 17, 21.

As can be seen from the figures, the first drive shaft 7 has a first section 7a, with substantially the same length as the second drive shaft 9, and a second section 7b which defines an extension of the first section 7a.

More in detail, the first propeller 17 is keyed on the second section 7b and the second propeller 21 is juxtaposed to the first propeller 17 and mounted idle on the second section itself.

The first section 7a of the first drive shaft 7 and the second drive shaft 9 are suitable for housing the first group 13 and second group 15 respectively, wherein the first cylinders 13a are phase-shifted with respect to the second cylinder 15a by a predetermined distance.

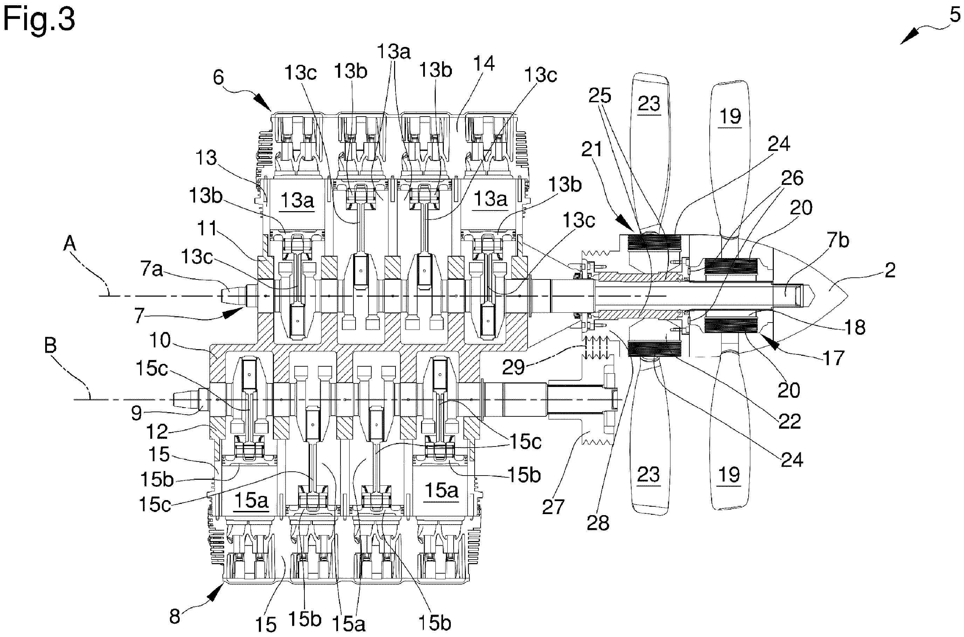

The propulsion system 5 comprises transmission means 27, 28, 29 interposed between the second drive shaft 9 and the second propeller 21 for the transmission of motion from the second drive shaft 9 to the second propeller 21. These transmission means 27, 28, 29 comprise:
- a drive wheel 27 locked together with the second drive shaft 9;
- a driven wheel 28 locked together with the second hub body 22. In the preferred embodiment shown in the illustrations, and more in detail in figure 3, the driven wheel 28 is defined in a single body piece with the second hub body 22. In the present case, the second hub body 22 has a suitably shaped portion, which defines the driven wheel 28, arranged on the side opposite to the first hub body 18. Alternative embodiments cannot however be ruled out wherein the second driven wheel 28 is locked together with the second hub body 22 by means of suitable fixing means, e.g., of the type of screws; and
- a flexible transmission element 29 closed on itself in a loop and wound at least partly around the drive wheel 27 and the driven wheel 28. In the preferred embodiment shown in the illustrations, the flexible transmission element 29 is a transmission belt. Such transmission belt is made, e.g., of a material such as textile fibers or rubberized nylon wires, steel wires or rubberized carbon fibers, which by their nature reduce vibrations and make the transmission of motion from the second drive shaft 9 to the second propeller 21 more uniform. Advantageously, the flexible transmission element 29 allows dampen the vibrations and also gives the transmission means 27, 28, 29 the function of flexible coupling. Alternative embodiments cannot however be ruled out wherein the transmission means 27, 28, 29 comprise a transmission element of the substantially rigid type, such as chains or gearwheels.

It has in practice been ascertained how the described invention achieves the intended objects and in particular the fact is underlined that the aircraft thus made has a redundancy system which allows ensuring the safety standards required for flying over the territory, both over urban areas and over suburban areas, providing the pilot with more practical and effective control of the aircraft in the event of failures thanks to the presence of two independent engines which control the rotation of the two propellers separately.

More in detail, by means of the aircraft made this way, the drawbacks linked to the asymmetric thrust caused by the engine still running are avoided, in case of engine failures, which occur in the aircraft of known type, wherein the propellers and the engines are arranged on the wings, thus reducing danger and the difficulty for the pilot to control the aircraft.

The particular aircraft thus made does in fact allow the pilot to safely complete the flight in the event of failures thanks to the independent operation of the first propeller from the second propeller and to their location on the first drive shaft arranged in line with the central axis of the aircraft, so as to avoid the phenomenon of asymmetric thrust in the case of failure of one of the two engines.

Moreover, in normal flight conditions, the two engines work both substantially at 50% of their nominal power while, in case of the failure of one of them, the other is able to complete the flight in safety conditions by operating at full power.

Advantageously, therefore, the aircraft thus made can be used for flying during night hours over areas without emergency landing strips or over water expanses. The use of this aircraft in place of the known type of aircraft allows simplifying training courses, with a consequent reduction of costs which would-be pilots have to sustain to obtain a pilot's license.

## Claims

1. Double-propeller aircraft (1) comprising a fixed wing structure (2, 3, 4) for the flight of said aircraft (1) and at least a propulsion system (5), **characterized by** the fact that said propulsion system (5) comprises:
- a first piston engine (6) to put a first drive shaft (7) in rotation around a first axis of rotation (A) substantially horizontal, wherein said first drive shaft (7) is a crankshaft or a shaft extending from a crankshaft and fixedly connected thereto;
- a second piston engine (8) to put a second drive shaft (9) in rotation around a second axis of rotation (B) substantially horizontal and parallel to said first axis of rotation (A), wherein said second drive shaft (9) is a crankshaft or a shaft extending from a crankshaft and fixedly connected thereto;
- at least a first propeller (17) keyed on said first drive shaft (7);
- at least a second propeller (21) mounted idle on said first drive shaft (7), said first propeller (17) and said second propeller (21) being coaxial and counter-rotating the one to the other with respect to said first axis of rotation (A);
- transmission means (27, 28, 29) interposed between said second drive shaft (9) and said second propeller (21) for the transmission of motion from said second drive shaft (9) to said second propeller (21);
wherein:
- said engines (6, 8) comprise a central engine housing (10), a first side engine housing (11) and a second side engine housing (12);
- said side engine housings (11, 12) are arranged along the aircraft's transversal direction;
- said first drive shaft (7) is housed between said central engine housing (10) and said first side engine housing (11); and
- said second drive shaft (9) is housed between said central engine housing (10) and said second side engine housing (12).

2. Aircraft (1) according to claim 1, **characterized by** the fact that said first propeller (17) comprises a first hub body (18) fitted around said first drive shaft (7) and a plurality of first blade elements (19) associated with said first hub body (18), and by the fact that said second propeller (21) comprises a second hub body (22) fitted around said first drive shaft (7) and a plurality of second blade elements (23) associated with said second hub body (22).

3. Aircraft (1) according to one or more of the preceding claims, **characterized by** the fact that said first propeller (17) and said second propeller (21) are of the variable pitch type.

4. Aircraft (1) according to claim 2 or 3, **characterized by** the fact that it comprises at least a radial bearing element (25) interposed between said first drive shaft (7) and said second hub body (22) and suitable for maintaining said second propeller (21) mounted idle on said first drive shaft (7).

5. Aircraft (1) according to one or more of the claims 2 to 4, **characterized by** the fact that said transmission means (27, 28, 29) comprise:
- at least a drive wheel (27) locked together with said second drive shaft (9);
- at least a driven wheel (28) locked together with said second hub body (22); and
- at least a flexible transmission element (29) closed on itself in a loop and wound at least partly around said drive wheel (27) and said driven wheel (28).

6. Aircraft (1) according to claim 5, **characterized by** the fact that said flexible transmission element (29) is a transmission belt.

7. Aircraft (1) according to one or more of the preceding claims, **characterized by** the fact that said driven wheel (28) is defined in a single body piece with said second hub body (22).

8. Aircraft (1) according to one or more of the preceding claims, **characterized by** the fact that said propellers (17, 21) are juxtaposed by interposition of at least an axial bearing element (26).

9. Aircraft (1) according to one or more of the preceding claims, **characterized by** the fact that:
- said first engine (6) comprises a first group (13) of first cylinders (13a) wherein are housed sliding a plurality of first pistons (13b) for driving said first drive shaft (7), said first group (13) being associated with said first side engine housing (11); and
- said second engine (8) comprises a second group (15) of second cylinders (15a) wherein are housed sliding a plurality of second pistons (15b) for driving said second drive shaft (9), said second group (15) being associated with said second side engine housing (12).

10. Aircraft (1) according to claim 9, **characterized by** the fact that:
- said first engine (6) comprises a first head (14) for the closure of said first cylinders (13a), said first head (14) being associated with said first group (13); and
- said second engine (8) comprises a second head (16) for the closure of said second cylinders (15a), said second head (16) being associated with said second group (15).

11. Aircraft (1) according to claim 9 or 10, **characterized by** the fact that said first cylinders (13a) and said second cylinders (15a) are horizontal and are arranged along opposing parallel lines.

## Patentansprüche

1. Doppelpropeller-Flugzeug (1), umfassend eine starre Tragflächenstruktur (2, 3, 4) für den Flug des Flugzeugs (1) und mindestens ein Antriebssystem (5), **dadurch gekennzeichnet, dass** das Antriebssystem (5) umfasst:
- einen ersten Kolbenmotor (6), um eine erste Antriebswelle (7) in Drehung um eine erste Drehachse (A), die im Wesentlichen horizontal ist, zu versetzen, wobei die erste Antriebswelle (7) eine Kurbelwelle oder eine sich von einer Kurbelwelle erstreckende und fest damit verbundene Welle ist;
- einen zweiten Kolbenmotor (8), um eine zweite Antriebswelle (9) in Drehung um eine zweite Drehachse (B), die im Wesentlichen horizontal und parallel zu der ersten Drehachse (A) ist, zu versetzen, wobei die zweite Antriebswelle (9) eine Kurbelwelle oder eine sich von einer Kurbelwelle erstreckende und fest damit verbundene Welle ist;
- mindestens einen ersten Propeller (17), der auf die erste Antriebswelle (7) befestigt ist;
- mindestens einen zweiten Propeller (21), der freilaufend an der ersten Antriebswelle (7) angebracht ist, wobei der erste Propeller (17) und der zweite Propeller (21) koaxial sind und der eine zum anderen in Bezug auf die erste Drehachse (A) gegenläufig dreht;
- Übertragungsmittel (27, 28, 29), die zwischen der zweiten Antriebswelle (9) und dem zweiten Propeller (21) für die Übertragung von Bewegung von der zweiten Antriebswelle (9) auf den zweiten Propeller (21) angeordnet sind;
wobei:
- die Motoren (6, 8) ein zentrales Motorgehäuse (10), ein erstes seitliches Motorgehäuse (11) und ein zweites seitliches Motorgehäuse (12) umfassen;
- die seitlichen Motorgehäuse (11, 12) entlang der Querrichtung des Flugzeugs angeordnet sind;
- die erste Antriebswelle (7) zwischen dem zentralen Motorgehäuse (10) und dem ersten seitlichen Motorgehäuse (11) aufgenommen ist; und
- die zweite Antriebswelle (9) zwischen dem zentralen Motorgehäuse (10) und dem zweiten seitlichen Motorgehäuse (12) aufgenommen ist.

2. Flugzeug (1) nach Anspruch 1, **dadurch gekennzeichnet, dass** der erste Propeller (17) einen ersten Nabenkörper (18), der um die Antriebswelle (7) herum angebracht ist, und mehrere erste Blattelemente (19), die mit dem ersten Nabenkörper (18) verbunden sind, umfasst, und dadurch, dass der zweite Propeller (21) einen zweiten Nabenkörper (22), der um die erste Antriebswelle (7) herum angebracht ist, und mehrere zweite Blattelemente (23), die mit dem zweiten Nabenkörper (22) verbunden sind, umfasst.

3. Flugzeug (1) nach einem oder mehreren der vorhergehenden Ansprüche, **dadurch gekennzeichnet, dass** der erste Propeller (17) und der zweite Propeller (21) vom Typ mit variablem Anstellwinkel sind.

4. Flugzeug (1) nach Anspruch 2 oder 3, **dadurch gekennzeichnet, dass** es mindestens ein Radiallagerelement (25) umfasst, das zwischen der ersten Antriebswelle (7) und dem zweiten Nabenkörper (22) angeordnet ist und dafür geeignet ist, den zweiten Propeller (21) auf der ersten Antriebswelle (7) freilaufend angebracht zu halten.

5. Flugzeug (1) nach einem oder mehreren der Ansprüche 2 bis 4, **dadurch gekennzeichnet, dass** die Übertragungsmittel (27, 28, 29) umfassen:
- mindestens ein Antriebsrad (27), das mit der zweiten Antriebswelle (9) verbunden ist;
- mindestens ein angetriebenes Rad (28), das mit dem zweiten Nabenkörper (22) verbunden ist; und
- mindestens ein flexibles Übertragungselement (29), das in einer Schleife in sich geschlossen und zumindest teilweise um das Antriebsrad (27) und das angetriebene Rad (28) herumgewickelt ist.

6. Flugzeug (1) nach Anspruch 5, **dadurch gekennzeichnet, dass** das flexible Übertragungselement (29) ein Treibriemen ist.

7. Flugzeug (1) nach einem oder mehreren der vorhergehenden Ansprüche, **dadurch gekennzeichnet, dass** das angetriebene Rad (28) in einem einzelnen Körperstück mit dem zweiten Nabenkörper (22) definiert ist.

8. Flugzeug (1) nach einem oder mehreren der vorhergehenden Ansprüche, **dadurch gekennzeichnet, dass** die Propeller (17, 21) durch Zwischenschaltung von mindestens einem Axiallagerelement (26) nebeneinanderliegend angeordnet sind.

9. Flugzeug (1) nach einem oder mehreren der vorhergehenden Ansprüche, **dadurch gekennzeichnet, dass**:
- der erste Motor (6) eine erste Gruppe (13) von ersten Zylindern (13a), in denen mehrere erste Kolben (13b) gleitend aufgenommen sind, zum Antreiben der ersten Antriebswelle (7) umfasst, wobei die erste Gruppe (13) mit dem ersten seitlichen Motorgehäuse (11) verbunden ist; und
- der zweite Motor (8) eine zweite Gruppe (15) von zweiten Zylindern (15a), in denen mehrere zweite Kolben (15b) gleitend aufgenommen sind, zum Antreiben der zweiten Antriebswelle (9) umfasst, wobei die zweite Gruppe (15) mit dem zweiten seitlichen Motorgehäuse (12) verbunden ist.

10. Flugzeug (1) nach Anspruch 9, **dadurch gekennzeichnet, dass**:
- der erste Motor (6) einen ersten Kopf (14) zum Verschließen der ersten Zylinder (13a) umfasst, wobei der erste Kopf (14) mit der ersten Gruppe (13) verbunden ist; und
- der zweite Motor (8) einen zweiten Kopf (16) zum Verschließen der zweiten Zylinder (15a) umfasst, wobei der zweite Kopf (16) mit der zweiten Gruppe (15) verbunden ist.

11. Flugzeug (1) nach Anspruch 9 oder 10, **dadurch gekennzeichnet, dass** die ersten Zylinder (13a) und die zweiten Zylinder (15a) horizontal verlaufen und entlang gegenüberliegenden parallelen Linien angeordnet sind.

## Revendications

1. Aéronef à double hélices (1) comprenant une structure d'aile fixe (2, 3, 4) pour le vol dudit aéronef (1) et au moins un système de propulsion (5), **caractérisé en ce que** ledit système de propulsion (5) comprend :
- un premier moteur à piston (6) pour mettre un premier arbre d'entraînement (7) en rotation autour d'un premier axe de rotation (A) sensiblement horizontal, dans lequel ledit premier arbre d'entraînement (7) est un vilebrequin ou un arbre s'étendant depuis un vilebrequin et raccordé de manière fixe à celui-ci ;
- un second moteur à piston (8) pour mettre un second arbre d'entraînement (9) en rotation autour d'un second axe de rotation (B) sensiblement horizontal et parallèle au premier axe de rotation (A), dans lequel ledit second arbre d'entraînement (9) est un vilebrequin ou un arbre s'étendant depuis un vilebrequin et raccordé de manière fixe à celui-ci ;
- au moins une première hélice (17) clavetée sur ledit premier arbre d'entraînement (7) ;
- au moins une deuxième hélice (21) montée à l'arrêt sur ledit premier arbre d'entraînement (7), ladite première hélice (17) et ladite deuxième hélice (21) étant coaxiales et en contre-rotation l'une à l'autre par rapport audit premier axe de rotation (A) ;
- des moyens de transmission (27, 28, 29) interposés entre ledit deuxième arbre d'entraînement (9) et ladite deuxième hélice (21) pour la transmission d'un mouvement dudit deuxième arbre d'entraînement (9) à ladite deuxième hélice (21) ;
dans lequel :
- lesdits moteurs (6, 8) comprennent un boîtier central de moteur (10), un premier boîtier latéral de moteur (11) et un deuxième boîtier latéral de moteur (12) ;
- lesdits boîtiers latéraux de moteurs (11, 12) sont installés le long de la direction transversale de l'aéronef ;
- ledit premier arbre d'entraînement (7) est logé entre ledit boîtier central de moteur (10) et ledit premier boîtier latéral de moteur (11) ; et
- ledit deuxième arbre d'entraînement (9) est logé entre ledit boîtier central de moteur (10) et ledit deuxième boîtier latéral de moteur (12).

2. Aéronef (1) selon la revendication 1, **caractérisé en ce que** ladite première hélice (17) comprend un premier corps de moyeu (18) ajusté autour dudit premier arbre d'entraînement (7) et une pluralité de premiers éléments de pale (19) associés audit premier corps de moyeu (18), et **en ce que** ladite deuxième hélice (21) comprend un deuxième corps de moyeu (22) ajusté autour dudit premier arbre d'entraînement (7) et une pluralité de deuxièmes éléments de pale (23) associés audit deuxième corps de moyeu (22).

3. Aéronef (1) selon l'une ou plusieurs des revendications précédentes, **caractérisé en ce que** ladite première hélice (17) et ladite deuxième hélice (21) sont du type à pas variable.

4. Aéronef (1) selon la revendication 2 ou 3, **caractérisé en ce qu'**il comprend au moins un élément de palier radial (25) interposé entre ledit premier arbre d'entraînement (7) et ledit deuxième corps de moyeu (22) et adapté pour maintenir ladite deuxième hélice (21) montée à l'arrêt sur ledit premier arbre d'entraînement (7).

5. Aéronef (1) selon l'une ou plusieurs des revendications 2 à 4, **caractérisé en ce que** lesdits moyens de transmission (27, 28, 29) comprennent :
- au moins une roue d'entraînement (27) verrouillée sur ledit deuxième arbre d'entraînement (9) ;
- au moins une roue entraînée (28) verrouillée sur ledit deuxième corps de moyeu (22) ; et
- au moins un élément de transmission flexible (29) fermé sur lui-même en boucle et enroulé au moins partiellement autour de ladite roue d'entraînement (27) et ladite roue entraînée (28).

6. Aéronef (1) selon la revendication 5, **caractérisé en ce que** ledit élément de transmission flexible (29) est une courroie de transmission.

7. Aéronef (1) selon l'une ou plusieurs des revendications précédentes, **caractérisé en ce que** ladite roue entraînée (28) est définie en une pièce unique de corps avec ledit deuxième corps de moyeu (22).

8. Aéronef (1) selon l'une ou plusieurs des revendications précédentes, **caractérisé en ce que** lesdites hélices (17, 21) sont juxtaposées par l'interposition d'au moins un élément de palier axial (26).

9. Aéronef (1) selon l'une ou plusieurs des revendications précédentes, **caractérisé en ce que** :
- ledit premier moteur (6) comprend un premier groupe (13) de premiers cylindres (13a) dans lesquels sont logés de manière coulissante une pluralité de premiers pistons (13b) pour entraîner ledit premier arbre d'entraînement (7), ledit premier groupe (13) étant associé audit premier boîtier latéral de moteur (11) ; et
- ledit deuxième moteur (8) comprend un deuxième groupe (15) de deuxièmes cylindres (15a) dans lesquels sont logés de manière coulissante une pluralité de deuxièmes pistons (15b) pour entraîner ledit deuxième arbre d'entraînement (9), ledit deuxième groupe (15) étant associé audit deuxième boîtier latéral de moteur (12).

10. Aéronef (1) selon la revendication 9, **caractérisé en ce que** :
- ledit premier moteur (6) comprend une première culasse (14) pour la fermeture desdits premiers cylindres (13a), ladite première culasse (14) étant associée audit premier groupe (13) ; et
- ledit deuxième moteur (8) comprend une deuxième culasse (16) pour la fermeture desdits deuxièmes cylindres (15a), ladite deuxième culasse (16) étant associée audit deuxième groupe (15).

11. Aéronef (1) selon la revendication 9 ou 10, **caractérisé en ce que** lesdits premiers cylindres (13a) et lesdits deuxièmes cylindres (15a) sont horizontaux et sont installés le long de lignes parallèles opposées.
